# EUROPEAN PATENT APPLICATION

(11) **EP 0 858 727 A1**
(43) Date of publication of application: **19.08.1998**
(21) Application number: 96935391.1
(22) Date of filing: 21.10.1996
(51) Int. Cl.: A01B 33/02, A01B 63/111, B62D 49/00

(54) **TRACTOR FOR RIDING**

(30) Priority: 23.10.1995 JP 274565/95; 26.01.1996 JP 12351/96; 23.05.1996 JP 128853/96
(71) Applicant: YANMAR AGRICULTURAL EQUIPMENT CO., LTD., Osaka-fu 530 (JP); SEIREI INDUSTRY CO., LTD., Okayama-ken 702 (JP)
(72) Inventor: KANOH, Kenshiro, Okayama 702-8004 (JP); MIYAZAKI, Tomoichi, Okayama 702-8004 (JP); TAMURA, Eiichi, Okayama 702-8004 (JP); OYAMADA, Yasuyuki, Okayama 702-8004 (JP)
(74) Representative: Bertrand, Didier
(86) International application number: JP9603053
(87) International publication number: WO9715178

(57) **Abstract**

A hood (11) covering a prime mover portion (3) disposed at the rear part of a machine frame (1) and a fender (11a) covering the upper portion of right and left rear wheels (7) fitted to the right and left side portions of the prime mover portion are formed integrally with each other, and a pivot portion (11b) is so disposed at the lower portion of the front edge of the fender as to extend in a transverse direction. The hood and the fender can be integrally opened and closed with the pivot portion being the fulcrum for rotation. Therefore, maintain-ability and safety of a tractor for riding can be improved.

## Description

### BACKGROUND TECHNOLOGY

The present invention relates to a tractor for riding with improved maintenance and safety performance.

### BACKGROUND ART

Hitherto, tractors for riding of a type are such that an operation section is disposed at a front portion of a frame of the machine body thereof and that a prime mover member and a transmission member are disposed at a rear portion thereof. Further, the prime mover member and the transmission member are covered with a hood and the operation section has a handle column disposed standing upright at a frontside edge portion of the frame of the machine body thereof and a steering wheel is mounted on the topside end of the handle column. At a portion close to the handle column are disposed a brake pedal and a forward-backward gear shift lever. Further, an operator's seat is disposed in a position immediately behind the handle column.

The front wheels are disposed at a lower front portion in front of the operator's seat as steering wheels and the rear wheels are disposed at a lower rear portion at the back of the operator's seat as driving wheels. Each of the wheels is covered with a fender for preventing the mud from splashing.

In order to make the tractor body compact in size, the tread between the left-hand wheels and the respective right-hand wheels can be set to become as narrow as possible and narrow enough to travel astride a ridge of a cultivated field.

Further, the riding tractor is so arranged as to enable performing a variety of tasks by the operation of the steering wheel thereof by the operator while walking at the side of the machine body without riding the riding tractor. For example, when things are to be loaded or unloaded onto or from a small truck, the riding tractor can be operated to load the things onto a bed of the small truck on a gangway or unload them therefrom by the operator manipulating the steering wheel while walking at the side of the riding tractor without riding.

At the back portion of the riding tractor is disposed a lifting or lowering link mechanism through which the riding tractor in turn can be connected to a farm cultivating machine so as to be liftable.

The farm cultivating machine may comprise a cultivator covering member, a rear cover mounted on a backside edge portion of the cultivator covering member so as to be pivotally movable upwards and downwards, a hanger rod interposed between the rear covering and the cultivator covering member so as to be slidable upwards and downwards in association with an upward and downward pivotal movement of the rear covering, and a feedback wire interposed between the hanger rod and the lifting or lowering link mechanism, in which the upward and downward pivotal movement of the rear covering is associated with the vertical movement of the lifting or lowering link mechanism via the hanger rod and the feedback wire to thereby sustain the depth of the furrows of the farm field cultivated with the farm cultivating machine at a constant level.

The riding tractor having the above structure still suffers from the problems as will be described hereinafter.
(1) As the thread of the tractor between the wheels is narrow, the prime mover member itself is crammed and various portions and apparatuses including the main body of the prime mover member have to be installed in a space interposed between left-hand and right-hand machine body frame sections. Further, the rear wheels mounted at the portion close to the prime mover member have to be mounted at a portion considerably close to the machine body frame.
   Therefore, a working space is too narrow that cleaning or repairing of the inside of the riding tractor is hard to be done even if the hood is opened upon maintenance of the prime mover or its related members.
(2) As the rear wheels are disposed close to the machine body at the side of the prime mover member and moreover the fenders for preventing the splashing of the mud are mounted over the rear wheels, maintenance of the prime mover becomes harder to be done.
(3) Although the mud, etc. splashed with the rear wheels may be attached to locations between the wheels and the machine body frames and within the prime mover member, the riding tractor suffers from the difficulty that the mud, etc. cannot be washed away readily due to its such narrow space structure.
(4) As the thread between the wheels is narrow as described hereinabove, there is the ribs that the ridge of the cultivating field bestride the wheels may be broken due to a slight error in operating the steering wheel during the cultivating work.
(5) The riding tractor having the structure as described hereinabove can be braked by depressing the brake pedal during operation of the riding tractor by the operator upon driving the riding tractor on the operator's seat, thereby enabling a smooth stop of the riding tractor. On the other hand, when the operator is operating the riding tractor while walking at the side of the riding tractor without riding the tractor, however, the operator cannot manipulate the brake pedal smoothly so that it is very difficult to stop the riding tractor suddenly in case of emergency and it may sometimes be dangerous.
(6) As there is only one portion for mounting a wiring of the feedback wire disposed on the hanger rod, an extent to which the feedback wire is pulled with tension cannot be varied so that a sensitivity of the up-and-down movement of the lifting or lowering link mechanism to the rear cover cannot be adjusted.
(7) As a support structure of the hanger rod is complicated, the manufacture of the riding tractor becomes difficult. Further, the number of parts is so great that the machine body of the riding tractor cannot be made lightweight.

The present invention has the object to provide a tractor for riding which can solve the problems inherent in the conventional tractors for riding.

### DISCLOSURE OF THE INVENTION

The present invention provides a tractor for riding which is characterized in that a hood covering a prime mover member disposed at the rear portion of a frame of the machine body thereof is formed integrally with fenders covering the upper portions of right-hand and left-hand rear wheels fitted to the right-hand and left-hand side portions of the prime mover member, a support portion is so disposed at the lower portion of the front edge of the fender with its axis directed laterally in a left- and right-hand direction, and the hood and the fender are so disposed as to be integrally opened and closed with the support portion acting as the fulcrum of pivotal movement.

The present invention provides the features for the following structures.
(1) At a front portion of the machine body is disposed a step portion which in turn has a plurality of slits disposed in a relationship spaced apart in a longitudinal direction and extending in a transverse direction, each of the plural slits having its peripheral edge raised to thereby form a raised edge portion.
(2) In the riding tractor in accordance with the present invention having the operation section disposed at the front portion of the machine body frame, on the one hand, and the prime mover member and the transmission member disposed at the rear portion thereof, on the other hand, in which the operation section is provided with a handle column standing upright at the front edge portion of the machine body frame with a steering wheel mounted on the topside end portion thereof and further with a brake pedal and a forward-backward gear shift lever disposed in the location close to the handle column, and the operator's seat is disposed in the position immediately behind the handle column, wherein a brake lever is disposed at a one side of the handle column and arranged so as to be operable between an operation position for releasing the braking operation and an operation position for implementing the braking operation, the operation position for releasing the braking operation in which the brake pedal is raised standing upright along a one side wall of the handle column to release the braking and the brake operation position in which the brake pedal is fallen beforehand over the frontside edge of the machine body.
(3) The brake lever is coupled with the brake pedal so as to be associated therewith, thereby allowing the braking operation with the brake lever to be associated with the braking operation with the brake pedal.
(4) The neutral return action of a forward-backward gear shift lever is associated with the braking operation of the brake pedal.
(5) A valve shift arm is provided with a plurality of wire mounting portions in a relationship spaced apart in a given distance in the radial direction of the pivotal movement of the valve shift arm and an edge portion of a feedback wire is mounted on each of the wire mounting portions so as to be detachable, thereby enabling the adjustment of a lifting and falling sensitivity of a lifting or lowering link mechanism to a rear covering.
(6) A hanger rod is provided with a plurality of wire mounting portions in a relationship spaced apart in a given distance in the direction in which the hanger rod extends and an edge portion of the feedback wire is mounted on each of the wire mounting portions so as to be detachable, thereby allowing a variation in an area in which a shift valve is operable.
(7) A farm cultivating machine may have a cultivator frame connected to the lifting or lowering link mechanism and a pair of left-hand and right-hand support arms inclining downward and extending in the left-hand and right-hand directions from the cultivator frame, in which the top edge of each of the support arms is provided with a cultivator cover member, a hanger rod stay is disposed projecting from each of the support arms obliquely toward the upper back direction, and the top edge portion of each of the hanger rod stays is mounted on a middle portion of the hanger rod so as to be slidable in up-and-down directions.

### BRIEF DESCRIPTION OF THE ACCOMPANYING DRAWINGS

Fig. 1 is a side view showing a whole side layout of a tractor for riding according to a first embodiment of the present invention.

Fig. 2 is a plan view showing the riding tractor according to the first embodiment of the present invention.

Fig. 3 is a side view showing a step portion.

Fig. 4 is a side view showing a front wheel steering unit.

Fig. 5 is a plan view showing a power transmission system.

Fig. 6 is a view showing a side clutch mechanism.

Fig. 7 is a plan view showing a side clutch handle.

Fig. 8 is a side view showing the side clutch handle.

Fig. 9 is a side view showing a tractor for riding according to a second embodiment of the present invention.

Fig. 10 is a plan view showing the riding tractor according to the second embodiment of the present invention.

Fig. 11 is a side view showing an essential part of the riding tractor.

Fig. 12 is a plan view showing an essential part of the riding tractor.

Fig. 13 is a side view showing a tractor for riding according to a third embodiment of the present invention.

Fig. 14 is a plan view showing the riding tractor according to the third embodiment of the present invention.

Fig. 15 is a side view showing a cultivating machine.

Fig. 16 is a rear view showing the cultivating machine.

Fig. 17 is a side view showing a lifting or lowering operation portion.

Fig. 18 is a plan view showing the lifting or lowering operation portion.

### BEST MODES OF CARRYING OUT THE INVENTION

The present invention will be described in more detail by way of examples with reference to the accompanying drawings.

### (First Embodiment)

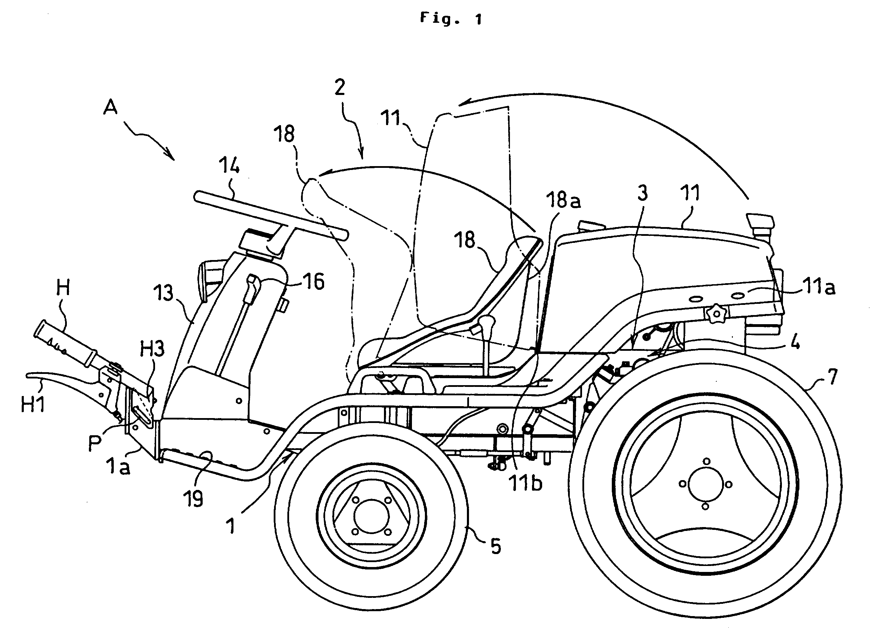

As shown in Fig. 1, reference symbol A indicates a tractor for riding according to a first embodiment of the present invention. The riding tractor A has a frame 1 of the machine body thereof, which in turn is provided at a front portion thereof with an operation section 2 and at a rear portion thereof with a prime mover member 3 and a transmission member 4. At a portion below the operation section 2 are mounted the left-hand and right-hand front wheels 5 and 5 on the machine body frame 1 through front axle cases 6 and 6, and the left-hand and right-hand rear wheels 7 and 7 are coupled with and associated with the transmission member 4 through rear axle cases 8 and 8. Reference numeral 9 stands for a transmission mechanism inter-posed between the prime mover member 3 and the transmission member 4, and the transmission mechanism 9 can in turn be provided with a clutch system for connecting or disconnecting the transmission of power by winding or loosening a transmission belt 9a with a tension arm 9b. Reference numeral 10 stands for a fuel tank, reference numeral 11 stands for a hood for covering the prime mover member 3 and the transmission member 4, and reference numeral 11a stands for a fender for covering each of the rear wheels 7 and 7.

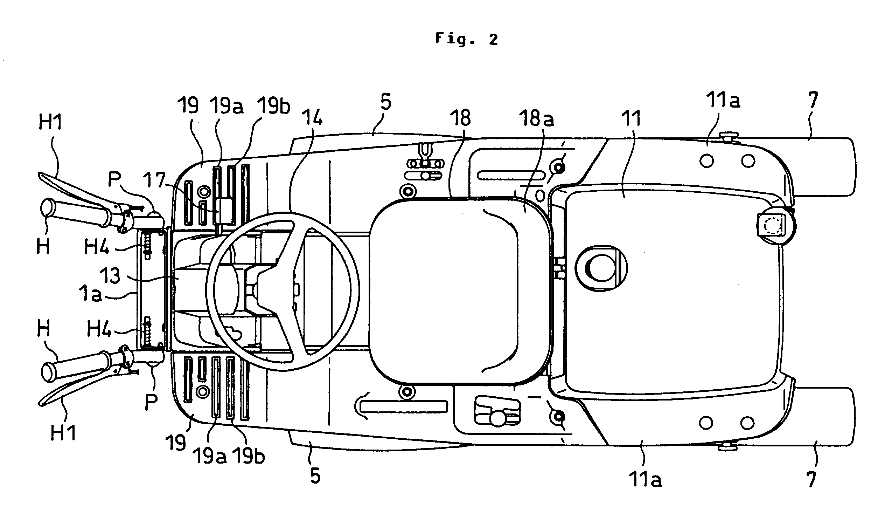

As shown in Figs. 1 and 2, the operation section 2 has a floor structuring member 12 disposed extending at the front portion on the machine body frame 1, and the floor structuring member 12 has a handle column 13 disposed standing upright at a central portion on the front side thereof. On the topside end of the handle column 13 is mounted a steering wheel 14. A forward-backward gear shift lever 16 is disposed at the left-hand side portion of the handle column 13 and a brake pedal 17 is disposed at the right-hand side portion thereof. An operator's seat 18 is disposed at the central portion on the back side of the floor structuring member 12. Reference numeral 19 stands for a step portion formed each on the left-hand and right-hand sides at the front portion of the floor structuring member 12.

The rear wheels 7 and 7 are coupled with and associated with the respective left-hand and right-hand side clutch mechanisms C and C disposed at the transmission member 4, thereby allowing the transmission of the power to be connected to or disconnected from the transmission member 4 and at the same time enabling

braking the rear wheels 7 and 7. In the riding tractor A with the structure as described hereinabove, the main feature of the present invention resides in the arrangement that the hood 11 for covering the prime mover member 3 disposed at the rear portion of the machine body frame 1 is formed integrally with the fenders 11a and 11a for covering the upper portions of the right-hand and left-hand rear wheels 7 and 7 fitted to the right-hand and left-hand side portions of the transmission member 4, respectively, a support portion 11b is so disposed at the lower portion of the front edge of the fenders 11a and 11a with its axis extending in a transverse direction, and the hood 11 and the fenders 11a and 11a are disposed to be integrally opened and closed with the support portion 11b so as to pivot as the fulcrum of rotation.

In this embodiment of the present invention, the riding tractor A may be of a small size large enough to transversely bridge astride one ridge of the cultivating field and the thread between the rear wheels 7 and 7 is so adapted as to fit to such a small size structure.

Therefore, the riding tractor A according to the present invention has a variety of units and systems arranged in a small space nearby the prime mover member 3 and the rear wheels 7 and 7 are mounted at the portions close to the machine body frame 1, thereby making the mud and other foreign materials likely to be attached to a portion between the rear wheels 7 and 7 and the machine body frame 1 as well as to the inside of the prime mover member 3.

With the arrangement as described hereinabove, the riding tractor according to the present invention allows the hood 11 to be opened or closed integrally with the fenders 11a and 11a and as a consequence the spaces around the prime mover member 3 and between the rear wheels 7 and 7 and the machine body frame 1 to be opened at the same time to a great extent, thereby providing an open view in all directions and making it ready to implement maintenance, for example, such as cleaning by removing the mud attached thereof or repairing the machine parts, etc.

Further, as shown in Figs. 1 and 2, the hood 11 is constructed in such a way that it extends so as to cover the prime mover member 3 extending in the transverse width between the rear wheels 7 and 7. It is further raised upwards from the lower portion on the back side of a rear back portion 18a of the operator's seat 18 up to the height approximate to the height of the upper edge of the rear back portion 18a, and it extends backwards from the approximate position forming a generally L-shaped longitudinal section. As shown in Fig. 1, each of the fenders 11a and 11a is formed in a shape such that it is raised gradually from the front portion to the rear portion parallel to and along the tire surface of each of the rear wheels 7 and 7 having the larger diameter and it is formed integrally with the left-hand and right-hand side edges of the hood 11, respectively.

Further, at the lower portion on the front end of the hood 11, i.e. at a portion close to the lower portion on the rear side of the rear back portion 18a of the operator's seat 18, there is disposed the pivot portion 11b with its axis directed laterally in the left-hand and right-hand direction so as to allow the hood 11 to be lifted forwards to a great extent at the position of the pivot portion 11b acting as the fulcrum of rotation, thereby enabling the opening or closing of the hood 11 integrally with the hood the fenders 11a and 11a.

Moreover, the operator's seat 18 is so disposed as to become inclined forwards in order to allow the hood 11 and the hood the fenders 11a, 11a to be lifted upwards. When the hood 11 and the hood the fenders 11a and 11a are to be opened, the operator's seat 18 is first inclined forward as shown in Fig. 1 and then they are opened.

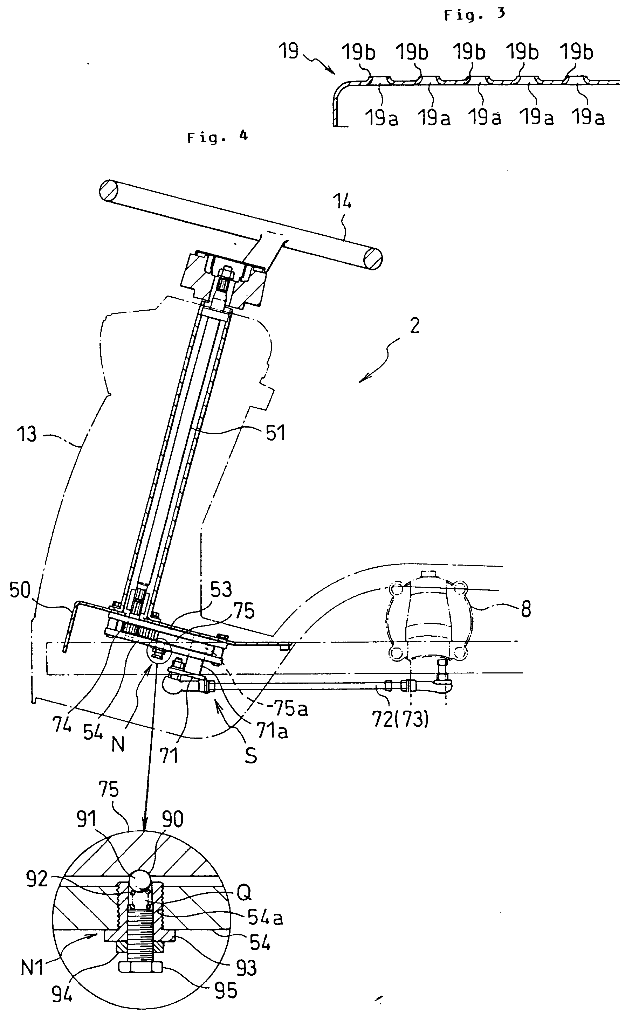

Furthermore, as shown in Fig. 2, each of the step portions 19 and 19 disposed on the left-hand and right-hand sides of the handle column 13 at the operation section 2 is provided with plural slits 19a extending transversely in a left-and right-hand direction and in a relationship spaced apart lengthwise in a forward-and-backward direction. At each of the slits 19a is formed a convex edge 19b raised upward, as shown in Fig. 3.

With the arrangement of the step portions 19 and 19, the riding tractor A allows the operator to see the farm field surface through the slits 19a, for example, thereby preventing the ridge of the farm field from being damaged or broken due to a mistake of operation while driving the tractor with the wheels astride the ridge thereof and ensuring a secure running operation of the tractor.

Further, the mud is likely to cling to the soles of the shoes of the operator during field work or the like and such mud is very slippery. The upward raised edges 19b can act as a slip preventive function so that they can prevent the operator from slipping upon riding or getting off the tractor or upon bracing the operator's feet. Thus, this can improve safety in operation of the tractor.

In addition, the upward raised edges 19b can assist in scratching off the mud clung to the soles of the operator's shoes and the scratched mud can be thrown away through the slits 19a, thereby maintaining the operation section 2 in always clean conditions.

Now, a description will be made of the steering mechanism of the riding tractor A and the left-hand and right-hand side clutch mechanisms C and C.

As shown in Fig. 4, the steering mechanism may include a steering shaft 51 mounted upright on a bracket 50 which is disposed on the front side of the operation section 2 so as to project upward between a pair of left-hand and right-hand machine frames 1. The bracket 50 is disposed in an inclined form with the front portion located in the higher position and the back portion located in the lower position and the handle column 13 standing from the bracket 50 is disposed in a somewhat backward inclined form, thereby enabling the operator to readily operate a steering wheel 14 mounted on the top end of the steering shaft 51.

The steering shaft 51 has the steering wheel 14 mounted on the top end thereof as well as a front wheel steering unit S coupled at its bottom end therewith so as to be driven in association with the steering wheels 14. The steering of the steering wheel 14 is transmitted to the front wheels 5 and 5 through the front wheel steering unit S.

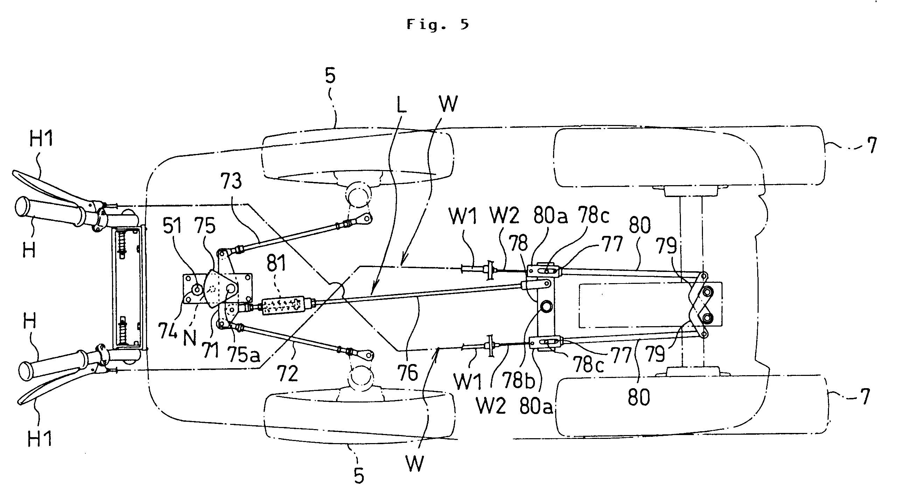

As shown in Figs. 4 and 5, the front wheel steering unit S located at the bottom side portion of the bracket 50 comprises a drive pinion 74 connected to the bottom edge of the steering shaft 51 and a fan-shaped center gear 75 meshable with the drive pinion 74.

The drive pinion 74 and the center gear 75 are clamped with an upper plate 53 and a lower plate 54 and the upper plate 53 and the lower plate 54 are connected to the bracket 50.

The center gear 75 is disposed with its base axle 75a projecting downward toward a base end portion of the center gear 75. The bottom end portion of the base axle 75a is spline-connected to a boss member 71a disposed projecting toward a steering arm 71.

To the left-hand and right-hand edge portion of the steering arm 71 are connected one ends of the respective left-hand and right-hand drag rods 72 and 73 and the other ends of the left-hand and right-hand drag rods 72 and 73 are connected to the respective front wheels 5 and 5.

More specifically, as shown in Fig. 5, the steering arm 71 is connected via the left-hand and right-hand drag rods 72 and 73 to the respective front wheels 5 and 5 and further connected to the steering shaft 51 via the drive pinion 74 and the center gear 75 so as to be operated in association with the steering shaft 51.

Accordingly, upon pivotal operation of the steering wheel 14, the pivotal force is transmitted from the steering shaft 51 to the drive pinion 74 and then to the center gear 75, followed by transmission to the base axle 75a and through the boss member 71a to the steering arm 71. Then, the steering arm 71 is allowed to swing horizontally at a predetermined angle and thus the front wheels 5 and 5 act as steering wheels.

Further, the center gear 75 is coupled with the left-hand and right-hand side clutch mechanisms C and C via a link mecha-nism L.

More specifically, as shown in Fig. 5, the coupling of the center gear 75 with the left-hand and right-hand side clutch mechanisms C and C, each having the braking function, through the link mechanism L as will be described in more detail hereinafter allows the operations of connecting and disconnecting the left-hand and right-hand side clutch mechanisms C and C at a predetermined steering angle as well as enables the application of the braking force to the rear wheels 7 and 7.

In the steering mechanism as described hereinabove according to the present embodiment, the front wheel steering unit S is provided with a neutral-position suspending member N for temporarily suspending and holding the steering wheel 14 in a straight-forward steering position and for preventing a steering vibration thereof upon steering in a straight-forward way.

The neutral-position suspending member N comprises a cavity 90 formed in the facing surface portion of the center gear 75 and a neutral-position suspending mechanism N1 comprised of a ball 91 so disposed as to allow its head portion to enter and be engaged with the cavity 90 upon the straight-forward steering and a spring 92 so disposed as to bias the ball 91 toward the cavity 90.

More specifically, in the present embodiment, as shown in Fig. 5, the neutral-position suspending member N is disposed at a central portion of the center gear 75 and, as shown in Fig. 4, the cavity 90 is formed having the size and shape so as to receive and engage with the head portion of the ball 91 at a central portion on a bottom side surface of the center gear 75. Further, as shown in Fig. 4, the lower plate 54 fastening the center gear 75 in association with the upper plate 53 is formed with a screwing hole 54a for mounting the neutral-position suspending mechanism N1. The screwing hole 54a is provided with a female screw at its inner peripheral wall and a plug 93 for a temporarily suspending mechanism is screwed with the female screw of the screwing hole 54a so as to provide a space Q inside in which to locate the spring.

Inside the space Q in which to locate the spring, the ball 91 is disposed so as for its head portion to enter and engage with the cavity 90 at an upper portion of the space Q and the spring 92 is also disposed so as to bias the ball 91 toward the cavity 90.

The base end of the spring 92 is supported with a top side surface of a spring-force adjustment bolt 95 screwed with a temporarily suspending plug 93 from the bottom end thereof so as to adjust the spring force in an appropriate way by adjusting the depth of engagement of the bolt 95 with the temporarily suspending plug 93. In Fig. 4, reference numeral 94 stands for a lock nut for the spring force adjustment bolt 95.

With the arrangement as described hereinabove, as the riding tractor A is brought into a straight-forward status, the head portion of the ball 91 of the neutral-position suspending mechanism N1 enters the cavity 90 of the center gear 75 to cause the spring 92 to press the center gear 75 by its biasing force and temporarily hold the center gear 75 in the straight-forward position, thereby holding the steering wheel 14 in a straight-forward posture, the steering wheel 14 being coupled and associated with the center gear 75 through the drive pinion 74 and the steering shaft 51. At the same time, the operator can get a feeling of holding the steering wheel 14 with a light force during driving in a straight-forward direction.

The riding tractor A according to the embodiment of the present invention is simple and compact in structure as described hereinabove and can be held in its straight-forward status in a sure way. Thus, for instance, when a variety of farm cultivating machines are joined to the riding tractor A and operated in the farm field, it can ensure a favorable straight-forward running performance leading to a reduction in the risk of breaking or damaging the ridge of the field upon operation and improving working efficiency.

Further, no problem with the operating force of the steering wheel 14 is caused because it can be adjusted with the spring-force adjustment bolt 95 for adjusting the force of the spring.

Now, a description will be made of the left-hand and right-hand side clutch mechanisms C and C as well as the link mechanism L.

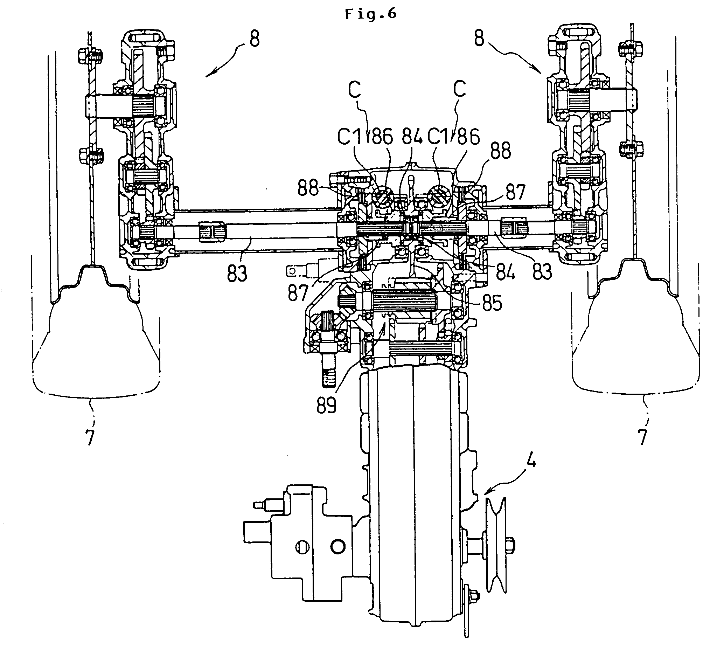

As shown in Fig. 6, the left-hand and right-hand side clutch mechanisms C and C are mounted on left-hand and right-hand driving shafts 83 and 83, respectively, each connected to

the transmission member 4.

The respective base ends of the left-hand and right-hand driving shafts 83 and 83 facing each other are formed in a spline arrangement and supported with bearings 84 and 84. A sandwich gear 85 is further engaged freely axially so as to enclose the bearings 84 and 84.

The base ends of the running axles 83 and 83 are engaged with left-hand and right-hand sliding collars 86 and 86 which in turn are biased with springs 87 and 87 so as to bias toward the side clutch gear 85 to be brought into a clutched status.

As shown in Fig. 5, the left-hand and right-hand sliding collars 86 and 86 are coupled with left-hand and right-hand clutch arms 79 and 79 formed in a curved form through connecting shafts C1 and C1 so as to be associated therewith. The left-hand and right-hand sliding collars 86 and 86 are disposed so as to be slidable on the running axles 83 and 83 in resistance to biasing force caused to occur by elasticity of the springs 87 and 87 by operation from the outside and declutched by releasing the engagement of the side clutch gears 85.

At each of the left-hand and right-hand end sides of the respective left-hand and right-hand sliding collars 86 and 86 is provided multi-disk brakes 88 and 88. Each of the multi-disk brakes 88 and 88, which in turn are brought into abutment with a surface on a one side of each of the sliding collars 86 and 86.

With the arrangement as described hereinabove, when the side clutches are intended to be released, the slidable collar 86 is transferred toward the outside. By transferring the slidable collar 86 further toward the outside, the slidable collar 86 presses the spring 87 to operate the multi-plate type brake 88.

When the slidable collar 86 is returned to its original position, the braking with the multi-disk brake 88 is released to couple the side clutch again. In Fig. 6, reference numeral 89 denotes a main shift gears group.

The link mechanism L is coupled with the center gear 75 of the front wheel steering unit S and carries out the operation of connecting and disconnecting the left-hand and right-hand side clutch mechanisms C and C in accordance with the steered angles of the front wheels 5 and 5 with respect to the steered angle of the steering wheel, thereby applying the braking force to the rear wheels 7 and 7. Therefore, as shown in Fig. 5, a portion of the link mechanism L is superimposed over the front wheel steering unit S.

More specifically, a one end of a shock absorbing rod 76 is connected on the right side of the boss member 71a of the steering arm 71 in a relationship spaced apart in a given distance so as to be pivotally movable and the other end of the shock absorbing rod 76 is connected to a crank 78 coupled with the left-hand and right-hand clutch arms 79 and 79 so as to be associated therewith. Reference numeral 81 denotes a buffer spring disposed at a middle portion of the shock absorbing rod 76.

The crank 78 is connected at its central portion by way of a crank shaft 78b with the other end portion of the shock absorbing rod 76 connected to a right-hand side of the crank shaft 78b and spaced apart in a predetermined distance from the connection position so as to be pivotally movable.

With this arrangement, the crank 78 is connected to the steering arm 71 by way of the shock absorbing rod 76 disposed crossing with a virtual line connecting the boss member 71a acting as the swinging center of the steering arm 71 to the crank shaft 78b of the crank 78. In this case, the direction in which the steering arm 71 swings is opposite to the direction in which the crank 78 swings.

On the both side end portions of the crank 78 are provided engaging projection pins 78c and 78c, respectively, which in turn are connected to left-hand and right-hand side clutch operation rods 80 and 80. In Fig. 5, reference symbols 80a, 80a denote each a pin engagement portion disposed on the base end of each of the left-hand and right-hand side clutch operation rods 80 and 80. Each of the pin engagement portions 80a, 80a is provided with an elongated hole 77 and 77, and the elongated holes 77 and 77 are engaged with the engaging pins 78c and 78c.

The left-hand and right-hand side clutch operation rods 80 and 80 are coupled each at its top end with the end portions of the left-hand and right-hand clutch arms 79 and 79, respectively, so as to be associated with the left-hand and right-hand clutch arms 79 and 79 with its base end connected to the left-hand and right-hand side clutch mechanisms C and C via the connecting shafts C1 and C1.

This structure allows the steering arm 71 to swing horizontally at a predetermined steering angle upon the pivotal operation of the steering wheel 14, thereby enabling the steering of the front wheels 5 and 5 each at a predetermined steered angle. And, the shock absorbing rod 76 is caused to move forward or backward in association with the horizontally swinging movement of the steering arm 71, and the forward or backward movement of the shock absorbing rod 76 allows the horizontal movement of the crank 78 in the direction opposite to the swinging direction of the steering arm 71.

The horizontally swinging movement of the crank 78 further causes the left-hand and right-hand clutch arms 79 and 79 to swing via the left-hand and right-hand side clutch operation rods 80 and 80, followed by pivotally moving the connecting shafts C1, C1 connected to the base ends of the left-hand and right-hand clutch arms 79 and 79 and by allowing each of the side clutch mechanisms C and C of the respective rear wheels 7 and 7 to be operated for the disconnection of the power.

By continuing the pivotal operation of the steering wheel 14, the steering arm 71 and the crank 78 are allowed to swing at greater angles, thereby enlarging the angles of the pivotal movement of the connecting shafts C1 and C1 of the left-hand and right-hand side clutch mechanisms C and C and braking the multi-disk brakes 88 and 88 disposed in the left-hand and right-hand side clutch mechanisms C and C to thereby apply the braking force to the rear wheels 7 and 7, respectively.

For instance, when the steering wheel 14 is rotated in the left-hand (counterclockwise) direction, the steering arm 71 is caused to rotate in the right-hand (clockwise) direction. By rotating the steering wheel 14 and the steering arm 71 in the directions as described above, the left-hand and right-hand drag rods 72 and 73 are caused to act on the dragging side and on the pushing side, respectively, thereby allowing the front wheels 5 and 5 to be steered to the left (counterclockwise) side and turned in the left-hand direction and the left-hand side clutch mechanism C to cut off the power. When the steering wheel 14 is steered further to the left, the multi-disk brake 88 of the left-hand side clutch mechanism C is caused to be operated for applying the braking force to the left-hand rear wheel 7.

At this time, the buffer spring 81 disposed at a middle portion of the shock absorbing rod 76 enables setting the braking force in an optional manner, thereby preventing damages of the transmission member 4 due to stroke over of the shock absorbing rod 76 or for other reasons.

With the arrangement as described hereinabove, the riding tractor A according to the present invention can be braked and turned with ease without causing any risk of an occurrence of operations in error simply by the operation of the steering wheel 14 when it is running under normal conditions. Further, the riding tractor can be turned and cornered at a very small radius and provide an improved operating feeling upon turning.

Turning back to Figs. 1 and 2, the riding tractor A according to the above-mentioned embodiment of the present invention has a pair of left-hand and right-hand side clutch handles H, H disposed at the front side end of the machine body and the left-hand and right-hand side clutch handles H, H are provided with left-hand and right-hand side clutch levers H1 and H1 mounted so as to be associated with the left-hand and right-hand side clutch mechanisms C and C, respectively.

This structure allows the left-hand and right-hand side clutch mechanisms C and C to be associated with the steering of a brake lever 15 mounted on the handle column 13 and to be operated with the left-hand and right-hand side clutch levers H1 and H1, too.

More specifically, as shown in Fig. 5, the left-hand and right-hand side clutch levers H1 and H1 are connected at the base end portions thereof to tips of side clutch wires W and W which in turn are connected at the other tips thereof in a cross way to the pin engagement portions 80a and 80a of the link mechanism L. In Fig. 5, reference symbol W1 stands for an outer wire of the side clutch wire W and reference symbol W2 stands for an inner wire of the side clutch wire W.

The above structure allows, for instance, the crank 78 to swing horizontally in the left-hand (counterclockwise) direction by pulling the side clutch wire W by the operation of the left-hand side clutch lever H1, thereby swinging the right-hand clutch arm 79 via the right-hand side clutch operation rod 80 and pivotally moving the connecting shaft C1 of the left-hand side clutch mechanism C connected to the base end of the right-hand clutch arm 79, followed by operating the left-hand side clutch mechanism C of the left-hand rear wheel 7 to disconnect the clutch. When the connecting shaft C1 is further pivotally moved, the multi-disk brake 88 is operated to brake the left-hand rear wheel 7.

Likewise, when the right-hand side clutch lever H1 is operated, the braking force is applied to the right-hand rear wheel 7.

Therefore, when the operator gets out of the riding tractor and the side clutch handles H and H are lifted to suspend the front wheels 5 and 5 while supporting the machine body by the rear wheels 7 and 7 alone, the riding tractor can be turned at an extremely small cornering radius by operating the left-hand and right-hand side clutch levers H1 and H1 in an appropriate manner, thereby readily enabling the riding tractor to start entering the adjacent furrows of the cultivating farm field.

As the riding tractor according to the present invention can be turned at such a small cornering radius in particular when it is to be turned at the end portion of the ridge of the farm field, the length of the ridge that cannot be cultivated can be shortened, thereby increasing the effective cultivating area of the farm field.

In addition, the riding tractor can be cornered slowly unlike the rapid cornering by the operation of the steering wheel 14 so that there is no risk of the riding tractor falling down upon cornering and it can be driven with high safety.

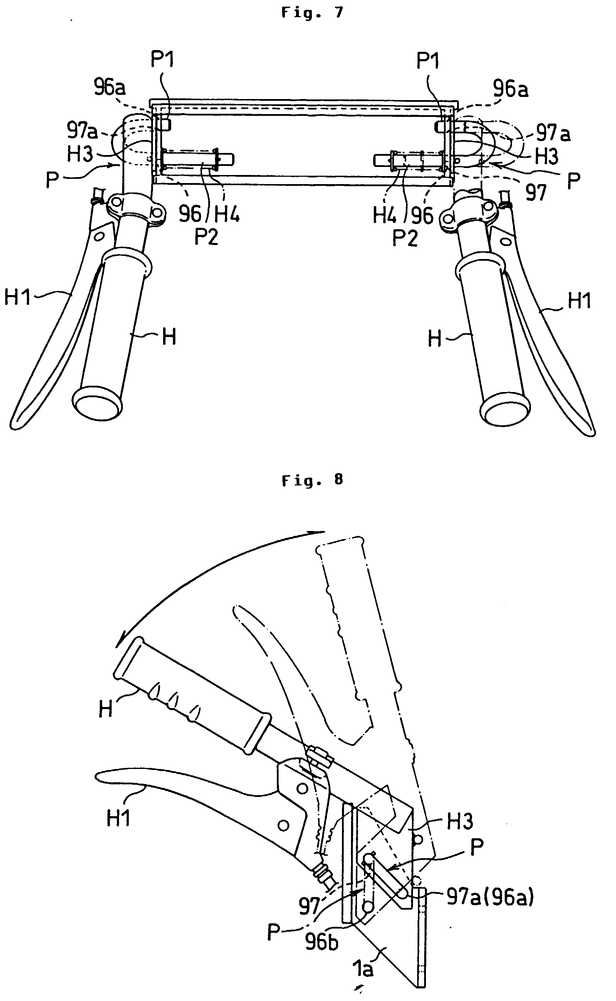

As shown in Figs. 7 and 8, the left-hand and right-hand side clutch handles H and H are mounted, respectively, on the left-hand and right-hand side end portions of a frame-shaped front hitch 1b mounted detachably on the front side end of the machine body frame 1 and they can be disposed so as to be movable vertically in an up-and-down direction.

More specifically, the front hitch 1b is provided at each of its left-hand and right-hand side end portions with a pin insertion hole 96 acting as the pivotal fulcrum and two aligning pin insertion holes 96a and 96b located under the position of the pin insertion hole 96. Further, the backside end portion of each of the left-hand and right-hand side clutch handles H and H is provided with a mounting plate H3.

The mounting plate H3 is provided with a pin insertion hole 97 and an aligning pin insertion hole 97a, the pin insertion hole 97 being provided so as to be agreeable with the pin insertion hole 96 and the aligning pin insertion hole 97a being provided so as to be agreeable selectively with either of the two aligning pin insertion hole 96a or 96b. The pin insertion hole 96 on the side of the front hitch 1b is then aligned so as to come into agreement with the pin insertion hole 97 on the side of the mounting plate H3 and likewise either of the aligning pin insertion hole 96a or 96b on the side of the front hitch 1b aligned so as to come in agreement with the aligning pin insertion hole 97a on the side of the mounting plate H3.

Further, a one top end portion P1 of a J-shaped connecting pin P is inserted through the agreed pin insertion holes, thereby enabling the left-hand and right-hand side clutch handles H and H to be fixed to the front hitch 1b in such a posture that the left-hand and right-hand side clutch handles H and H are located either in the upper side position or in the lower side position.

Further, reference symbol H4 stands for a spring biasing the connecting pin P toward the side of the side end portion of the front hitch 1b, and the spring H4 is mounted winding about an outer peripheral surface of a straight-elongating base end portion P2 of the connecting pin P.

With the arrangement of the side clutch handles H and H in association with the front hitch 1b, when the side clutch levers H1 and H1 are to be operated, the side clutch handles H and H are fixed to the front hitch 1b in the posture in which they are located in the lower positions. On the other hand, when none of the side clutch levers H1 and H1 are to be operated, the side clutch handles H and H are allowed to be fixed to the front hitch 1b in such a manner that they are located in the upper positions, thereby shortening the entire length of the riding tractor A and, for instance, making the riding tractor easy to be placed in a storage barn.

When the side clutch handles H and H of the riding tractor are located in their upper positions, the side clutch levers H1 and H1 are allowed to abut with obstacles such as a wall of the storage barn or the like even if the riding tractor would hit the obstacle in its front end portion upon placing the riding tractor in the storage barn or the like, thereby allowing the side clutch levers H1 and H1 to be pressed toward disconnecting the clutch and cutting out the power leading to stopping the running of the riding tractor without undergoing further damages on the machine body upon the impact against the obstacle.

Further, as the side clutch handles H and H are mounted on the respective left-hand and right-hand side end portions of the front hitch 1b, they do not cause any hindrance upon mounting a front weight and other members to the front hitch 1b.

Moreover, in instances where the side clutch handles H and H are detached from the front hitch 1b, a front-side farm cultivating machine can be joined to the front hitch 1b.

### (Second Embodiment)

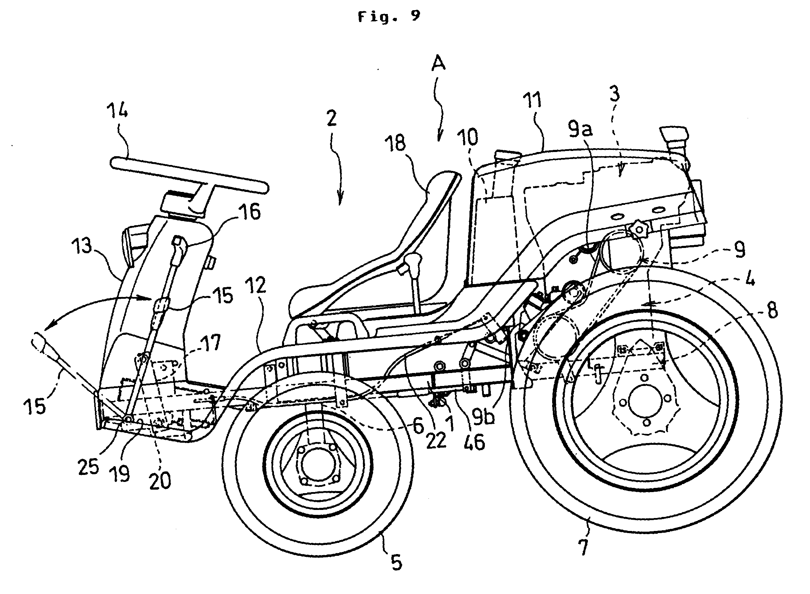

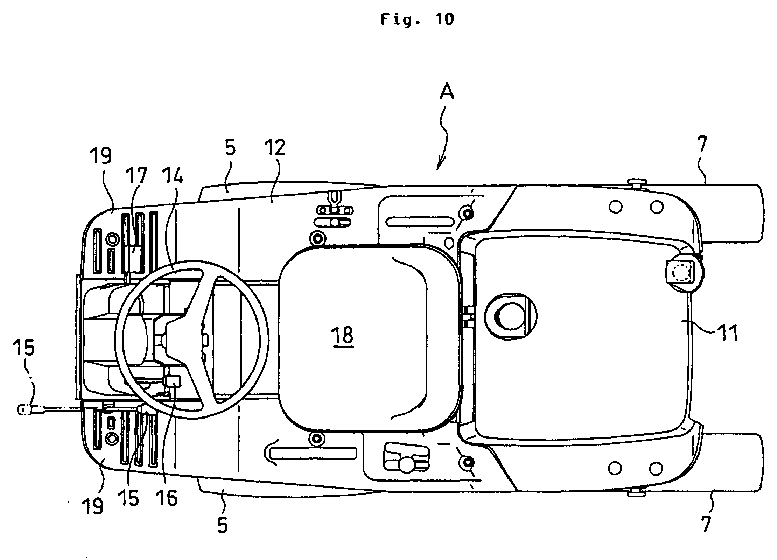

As shown in Figs. 9 and 10, there is shown a riding tractor A according to the second embodiment of the present invention, which has substantially the same basic structure as the riding tractor A according to the first embodiment of the present invention with the exception that a brake lever 15 is disposed in a left-hand side portion of the forward-backward gear shift lever 16.

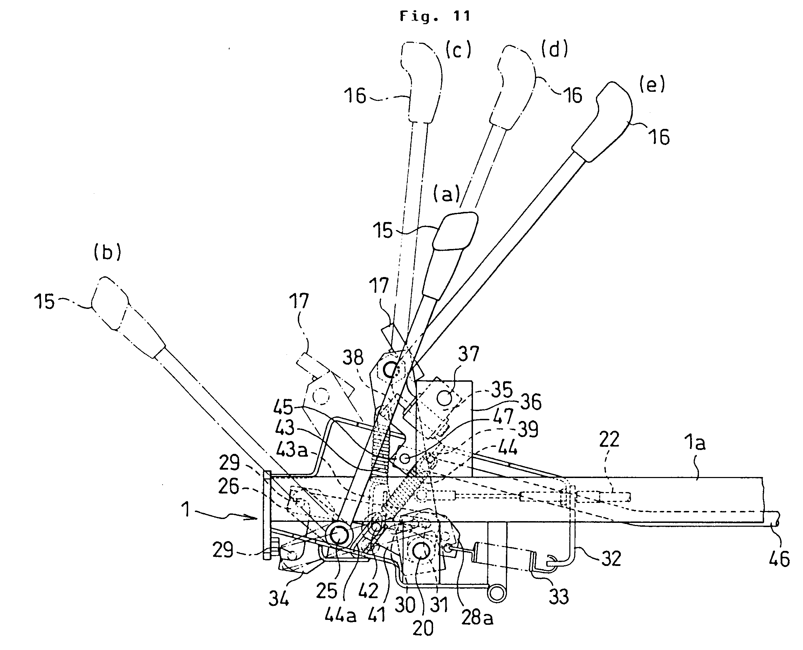

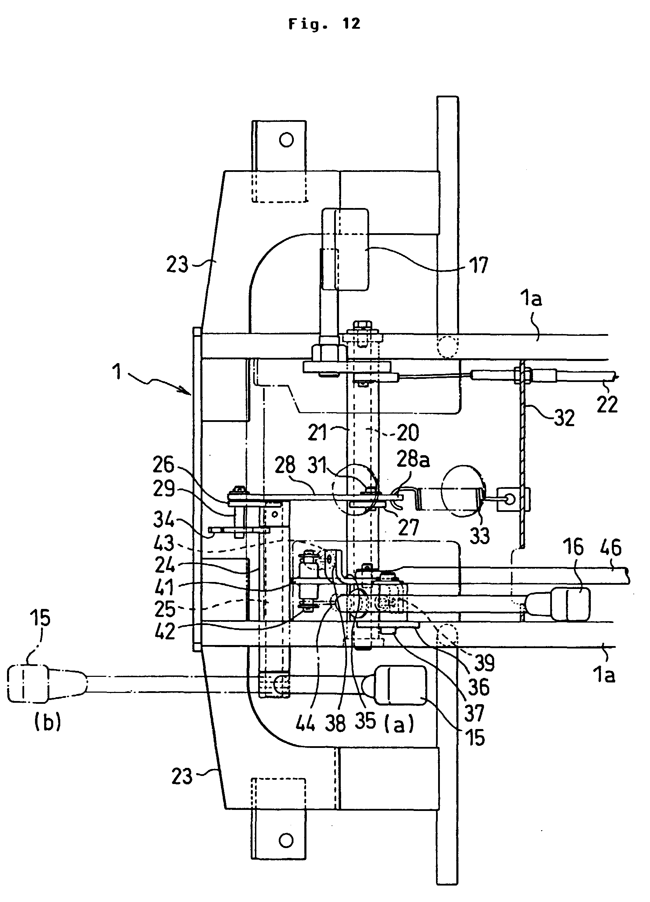

The brake lever 15 is coupled with the brake pedal 17 so as to be associated therewith, thereby allowing the braking opera-tion of the brake lever 15 to be associated with the braking operation of the brake pedal 17. Further, the braking operation of the brake pedal 17 is so arranged as to be associated with the operation of the forward-backward gear shift lever 16 for returning to the neutral position. This configuration will be described in more detail with reference to Figs. 11 and 12.

As shown in Figs. 11 and 12, a support shaft 20 is disposed extending transversely in the left- and right-hand direction between the front portion of a pair of left-hand and right-hand side frames 1a and 1a constituting part of the machine body frame 1. The support shaft 20 is engaged with a cylinder-shaped brake pedal support boss member 21 for supporting the brake pedal, extending in the left-hand and right-hand direction, so as to be rotatable about the support shaft 20. To a right-hand side portion of the brake pedal support boss member 21 is connected the base end of the brake pedal 17 to which base end portion in turn is connected one end of a braking operation wire 22 while the other end of the braking operation wire 22 is connected to a brake member (not shown) disposed in the transission member 4. In the drawings, reference numeral 23 stands for a frame for supporting the step portion.

With the arrangement as described hereinabove, the brake member can be braked via the braking operation wire 22 upon depressing the brake pedal 17.

Further, as shown in Figs. 11 and 12, a brake lever support boss member 24 for supporting the brake lever is mounted on the left-hand side frame 1a, extending transversely in the left- and right-hand direction. A lever support shaft 25 is inserted into the boss member 24 so as to be rotatable and the brake lever 15 is mounted at the bottom end thereof on the left-hand side end portion of the lever support shaft 25. The lever support shaft 25 is provided at its right-hand side end portion with a frontside coupling arm 26 projecting toward the upper front direction. Between the top end portion of the frontside coupling arm 26 and a backside coupling arm 27 disposed projecting downward from the brake pedal support boss member 21 is interposed a coupling link 28 extending lengthwise in the forward-and-backward direction.

Moreover, the coupling link 28 is connected at a front end portion thereof to the top end portion of the frontside coupling arm 26 via a connecting pin 29 and provided at a back end portion thereof with a longitudinally elongated hole 30. A slidable guide pin 31 mounted on the top end portion of the backside coupling arm 27 is inserted into the elongated hole 30, thereby connecting the coupling link 28 to the backside coupling arm 27 so as to be slidable longitudinally in the forward-and-backward direction.

Further, a backside end portion 28a of the coupling link 28 is curved downward in an L-shaped form and is connected via a tension spring 33 to a transverse connection member 32 disposed transversely between the backside end portion 28a thereof and the front portions of the respective left-hand and right-hand side frames 1a and 1a. In the drawings, reference numeral 34 denotes a rotation regulating member for regulating the range of the up-and-down pivotal movement of the frontside coupling arm 26 by the aid of the connecting pin 29.

With the arrangement as described hereinabove, the brake lever 15 is disposed so as to be raised or fallen down with the lever support shaft 25 at the center of operation between an operation position (a) for releasing the braking status and an operation position (b) for braking, the brake lever 15 being raised along a left-hand side wall of the handle column 13 when located in the operation position (a) and being fallen down projecting forward from the frontside end of the machine body frame 1 when located in the operation position (b). As the brake lever 15 is pivotally moved to fallen down forward to the operation position (b) from the operation position (a), the pivotal movement force is transmitted from the lever support shaft 25 to the brake pedal 17 via the frontside coupling arm 26, the coupling link 28, then the backside coupling arm 27 and further the brake pedal support boss portion 21. Thus, as the brake pedal 17 is depressed for braking, the brake member is braked through the braking operation wire 22.

At this time, the frontside coupling arm 26 is connected to the coupling link 28 upon operation of shifting the brake lever 15 to the operation position (a) for releasing the braking status and to the operation position (b) for braking Further, at this time, the connecting pin 29 pulled backward with the tension spring 33 can hold the posture of the brake lever 15 in each of the operation positions (a) and (b) by rotating the brake lever 15 to the upper position and to the lower position about the lever support shaft 25 in the range of the up-and-down pivotal movement restricted with the rotation regulating member 34.

Further, upon carrying out the braking operation by depressing the brake pedal 17, a slidable guide pin 31 connecting the backside coupling arm 27 to the coupling link 28 slide forward in the elongated hole 30, thereby falling to transmit the pivotal force to the coupling link 28 and holding the brake lever 15 in the operation position (a) for releasing the braking operation.

In the immediately upper position of the left-hand side portion of the brake pedal support boss member 21 is disposed the forward-backward gear shift lever 16, and the forward-backward gear shift lever 16 is mounted at a lower end portion thereof on a lever support bracket 35 for supporting the lever. The lever support bracket 35 is mounted on a stay 37 disposed standing from the left-hand side frame 1a so as to be movable pivotally with an axial support pin 37 with its axis directed laterally in the left- and right-hand direction. The forward-backward gear shift lever 16 can be operated to shift so as to take a forward shift operation position (c) by rotating it about the pin 37 to the position standing generally upright, to the neutral operation position (d) that pivots somewhat backward from the forward shift operation position (c), and to a backward shift operation position (e) that pivots further backward from the neutral operation position (d).

In addition, the lever support bracket 35 is formed with first and second spring engagement sections 38 and 39 at front and rear portions thereof, respectively. A coupling arm 41 is disposed on a left-hand side portion of the brake pedal support boss member 21 so as to project toward the upper front direction. On the frontside end portion of the coupling arm 41 is mounted the spring engagement pin 42 with its axis directed laterally in the left- and right-hand direction so as to extend through the entire length of the coupling arm 41, thereby interposing a first neutral return spring 43 for returning to the neutral position between the right-hand side end portion of the spring engagement pin 42 and the first spring engagement section 38 and a second neutral return spring 44 for returning to the neutral position between the left-hand side end portion of the spring engagement pin 42 and the second spring engagement section 39.

Furthermore, each of the first and second neutral return springs 43 and 44 is formed at a lower portion thereof with a slidable engagement portion 43a and 44a for slidably engaging with the engagement pin, respectively, and the left-hand and right-hand side end portions of the spring engagement pin 42 are allowed to slide in each of the engagement portions 43a and 44a only in the direction in which the spring contracts and expands.

When the forward-backward gear shift lever 16 is located in the backward shift operation position (e) in the manner as described hereinabove, the top side of the slidable engagement portion 43a of the first neutral return spring 43 is allowed to abut and engage with the right-hand side end portion of the spring engagement pin 42 and the left-hand side end portion of the spring engagement pin 42 is located on the base end side of the slidable engagement portion 44a of the second neutral return spring 44.

On the other hand, when the forward-backward gear shift lever 16 is located in the forward shift operation position (c), on the contrary to the above arrangement, the base end side of the slidable engagement portion 43a of the first neutral return spring 43 is located on the right-hand side end portion of the first neutral return spring 43 and the top side of the slidable engagement portion 44a of the second neutral return spring 44 is allowed to abut and engage with the left-hand side end portion of the spring engagement pin 42.

Further, the lever support bracket 35 is formed at a lower end portion with a connecting section 45 for connecting to a coupling rod 46, and the coupling rod 46 is interposed between the connecting section 45 and a forward-and-backward shift mechanism (not shown) disposed in the transmission member 4 so as to extend longitudinally in the forward-and-backward direction. In the drawings, reference numeral 47 stands for a connecting pin.

By operating the brake lever 15 each to take the forward shift operation position (c), the neutral operation position (d) and the backward shift operation position (e) in the manner as described hereinabove, the forward-and-backward shift mechanism can be shifted by the aid of the coupling rod 46 to the forward shift position, to the neutral (declutching) position, and to the backward shift position.

Moreover, when the brake pedal 17 is depressed and braked in such a state that the forward-backward gear shift lever 16 is located in the forward shift operation position (c) or the backward shift operation position (e), the pivotal force of the forward-backward gear shift lever 16 is transmitted from the brake pedal support boss member 21 first to the coupling arm 41, followed by transmitted therefrom back to the forward-backward gear shift lever 16 via the spring engagement pin 42 through the first neutral return spring 43 or the second neutral return spring 44 and then through the first spring engagement section 38 or the second spring engagement section 39 and by forcibly returning the forward-backward gear shift lever 16 to the neutral operation position (d).

In instances where the brake lever 15 is braked, too, the brake pedal 17 is subjected to the braking operation in association with the brake lever 15 in the manner as described hereinabove so that the operation for forcibly returning the forward-backward gear shift lever 16 to the neutral operation position (d) is also carried out in a way as described hereinabove.

Therefore, when the braking operation is executed by the brake lever 15 or the brake pedal 17, the brake member is braked leading to the stop of the running of the vehicle body, while the forward-and-backward shift mechanism disposed in the transmission member 4 is allowed to be stayed in the neutral position, that is, in the state in which the clutch is disconnected. Thus, even when the operation for releasing the braking status is carried out thereafter, the vehicle does not start abruptly.

In this embodiment of the present invention, the riding tractor A according to the present embodiment is structured in the manner as described hereinabove so that the operator can operate the riding tractor while seating on the operator's seat 18 disposed behind the steering wheel 14 mounted on the topside end of the handle column 13 disposed standing at the frontside end portion of the machine body frame 1. Accordingly, the riding tractor according to the present invention can provide the operator with good visibility particularly toward the forward side of the machine body, thereby leading to running the riding tractor with a high degree of security. Moreover, as needed, the operator can get out of the vehicle and operate the tractor outside the vehicle body by operating the steering wheel 14 while walking on the left-hand side of the steering wheel 14 or on the front side of the machine body.

As the brake lever 15 and the forward-backward gear shift lever 16 are disposed on the left-hand side of the steering wheel 14, the operator can readily operate the brake lever 15 and the forward-backward gear shift lever 16 in an appropriate manner.

In particular, as the brake lever 15 is located standing along the left-hand side wall of the handle column 13 when it is in the operation position (a) for releasing the braking status, it does not obstruct the way of the operator riding and getting out of the tractor and at the same time permits the operator to easily implement the operation of shifting the brake lever 15 to the operation position (b) for braking by falling it down forward over the front side while the operator is operating the tractor on the left-hand side or the front side of the steering wheel 14. Thus, the operator can rapidly stop running the machine body with certainty upon emergency requiring the rapid stop of the tractor, thereby ensuring high security in driving the tractor.

When the brake lever 15 is operated for braking at this time, the forward-backward gear shift lever 16 can be returned forcibly to the neutral position, thereby bringing the forward-and-backward shift mechanism disposed in the transmission member 4 into a state that the clutch is disconnected. Therefore, when the brake lever 15 is operated to release the braking operation, the tractor does not start moving abruptly, thereby ensuring security upon starting the tractor. Moreover, the forward-backward gear shift lever 16 located in the neutral operation position (d) can be operated smoothly to follow the operation to shift to the forward shift operation position (c) or the back-ward shift operation position (e).

### (Third Embodiment)

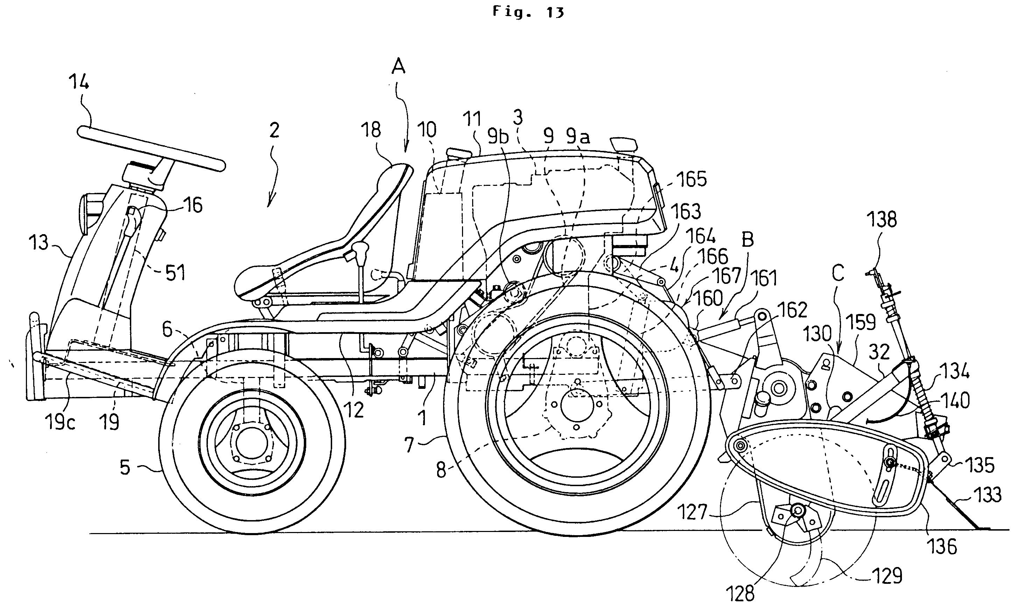

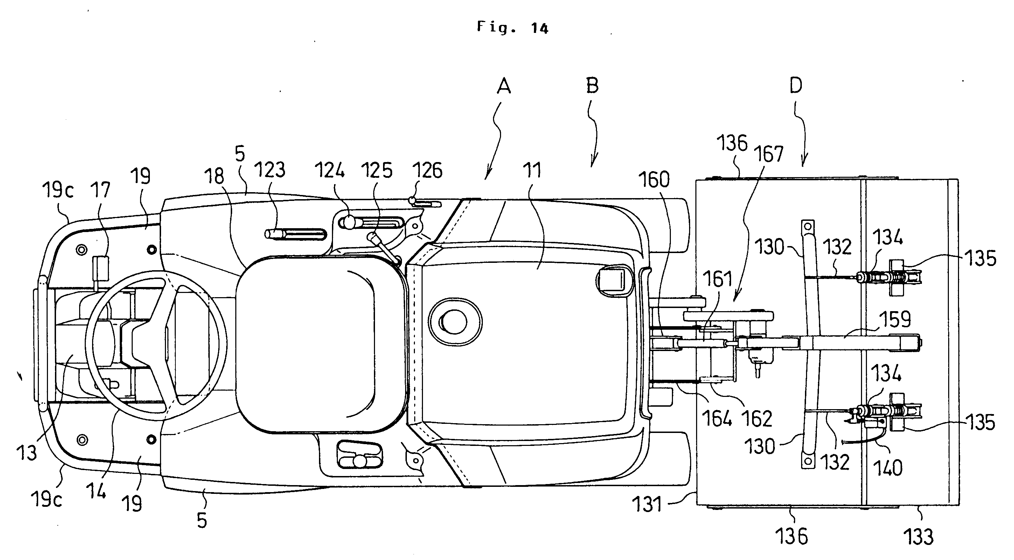

As shown in Figs. 13 and 14, the riding tractor A according to the third embodiment of the present invention has substantially the same basic structure as the riding tractor A in accordance with the first embodiment of the present invention, with the exception that a lifting or lowering link mechanism B is provided at a back portion thereof and the lifting or lowering link mechanism B can be liftably linked to a farm cultivating machine D.

The riding tractor A according to the third embodiment is constructed such that guard pipes 19c and 19c are mounted each on an outer side edge portion of each of the step portions 19 and 19 and the guard pipes 19c and 19c are connected to each other on the front side of the handle column 13 in order to make the front portion of the tractor compact in size and tough in intensity and to allow the tractor to turn at a smaller radius of rotation. In the drawings, reference numeral 123 stands for a lifting or lowering lever, reference numeral 124 for a rotary clutch lever, reference numeral 125 a stop valve lever, and reference numeral 126 for an plough depth adjustment lever for adjusting the cultivating depth of the farm field.

As shown in Figs. 13 and 14, the lifting or lowering link mechanism B may comprise a top link stay 160, a top link 161, a pair of left-hand and right-hand lower links 162 and 162, a pair of left-hand and right-hand lift arms 163 and 163, a pair of left-hand and right-hand lift links 164 and 164, an operation arm 165 for operating the lifting and lowering actions, and a lifting or lowering cylinder 166.

The lifting or lowering link mechanism B is operated in such a manner that the pair of left-hand and right-hand lift arms 163 and 163 are disposed so as to pivot upward or downward in association with the expanding or contracting action of the lifting or lowering cylinder 166 and the pair of left-hand and right-hand lower links 162 and 162 are then allowed to pivot upward or downward via the pair of left-hand and right-hand lift links 164, 164 in association with the upward or downward pivotal movement of the pair of the left-hand and right-hand lift arms 163 and 163, thereby enabling the farm cultivating machine D connected to the backside ends of the left-hand and right-hand lower links 162 and 162 and the top link 161 to be lifted or lowered. In the drawings, reference numeral 168 stands for a top link connecting section and 169 stands for a lower link connecting section.

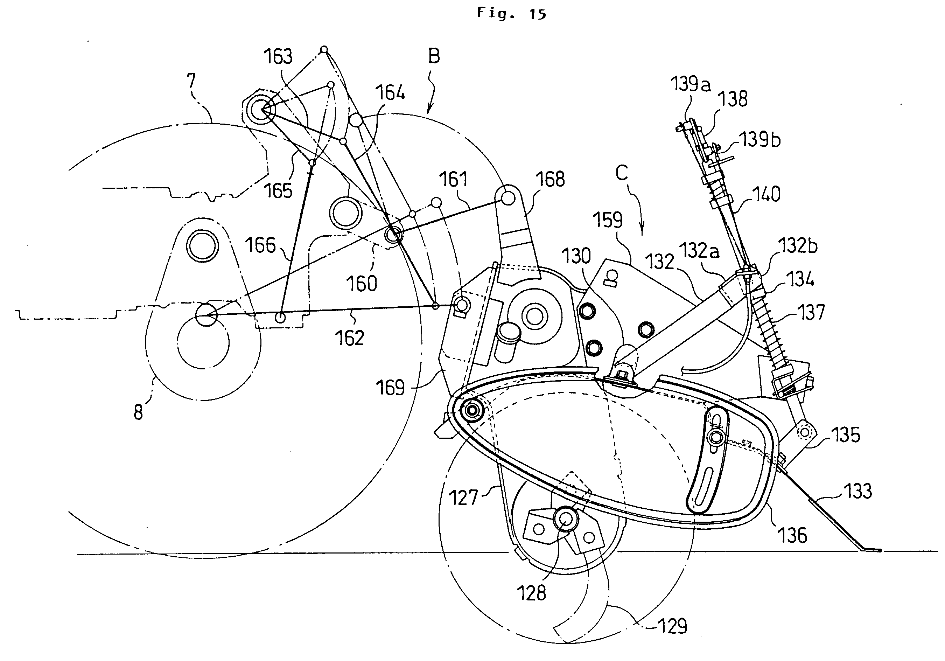

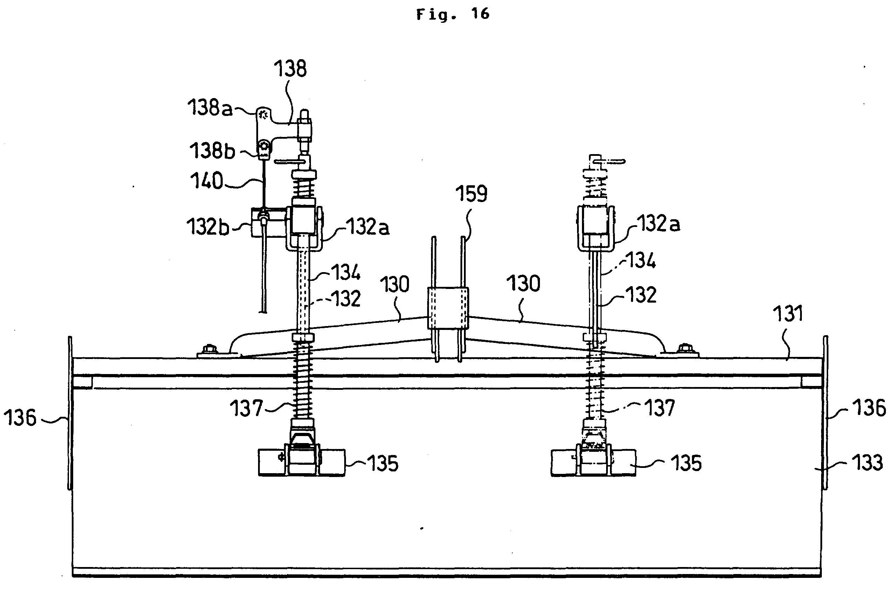

As shown in Figs. 15 and 16, the farm cultivating machine D may comprise a cultivator machine frame 159 extending lengthwise in the forward-and-backward direction and connected at a front-side end portion thereof to the lifting or lowering link mechanism B, a cultivator transmission casing 127 extending vertically in the upward-and-downward direction and mounted at an upper end portion thereof on a lower portion of the cultivator machine frame 159, a cultivator shaft 128 projecting transversely in the left- and right-hand direction from the lower end portion of the cultivator transmission casing 127, and plural cultivating blades 129 mounted on the cultivator shaft 128.

On an upper portion of the cultivator machine frame 159 of the farm cultivating machine D is mounted a pair of left-hand and right-hand cylinder-shaped support arms 130 and 130 each at the base end thereof, and the left-hand and right-hand cylinder-shaped support arms 130 and 130 are disposed so as to extend toward the left-hand and right-hand sides inclining downward. A topside end portion of each of the left-hand and right-hand cylinder-shaped support arms 130 and 130 is shaped in a compressed flat form, on which is mounted a cultivator covering member 131 extending to the left and right from a middle portion of the side wall of the cultivator transmission casing 127.

Further, a pair of left-hand and right-hand hanger rod stays 132 and 132 are disposed projecting in the upper back direction from the middle portions of the left- and right-hand cylinder-shaped support arms 130 and 130. A rear covering 133 is mounted at its topside edge on the rear side edge of the cultivator covering member 131 so as to be pivotally movable vertically in the up-and-down direction.

On the left-hand and right-hand side portions of the rear covering 133 are mounted the base ends of left-hand and right-hand hanger rods 134 and 134, respectively, via mounting brackets 135 and 135 so as to be pivotally movable vertically in the up-and-down direction. A top end portion of each of the left-hand and right-hand hanger rod stays 132 and 132 is formed into a generally U-shaped mounting portion 132a and 132a on each of which the middle portion of each of the left-hand and right-hand hanger rods 134 and 134 is mounted so as to be slidable vertically in the up-and-down direction. In the drawings, reference numeral 136 stands for a side covering, and reference numeral 137 stands for a spring biasing the rear covering. It is to be noted herein that, although in this embodiment the hanger rod stay 130 is provided at the middle portion of the support arm 130, the present invention is not construed as being limited to this feature and the hanger rod stay 130 may be provided at a topside end portion of the support arm 130.

Moreover, the base end of a wire mounting arm 138 is mounted on the topside edge of the left-hand hanger rod 134 and the topside edge of the wire mounting arm 138 extends toward the left-hand side. Further, the topside edge of the wire mounting arm 138 is disposed extending in the direction in which the hanger rod 134 extends, that is, vertically in the up-and-down direction to form upside and downside wire mounting portions 138a and 138b, respectively. The upside wire mounting portion 138a is provided with a mounting pin 139a projecting toward the forward side and the downside wire mounting portion 138b is provided with a mounting pin 139b projecting toward the backward side. A feedback wire 140 is detachably mounted on either one of the mounting pins 139a and 139b.

In the above embodiment of the present invention, the base end of the feedback wire 140 is mounted on the mounting pin 139b of the downside wire mounting portion 139b. In the drawings, reference symbol 132b stands for a wire fixing stay formed at the mounting portion 132a of the hanger rod stay 132.

Further, the feedback wire 140 is coupled with a lifting or lowering operation member 141 disposed so as to implement the lifting or lowering operation of the lifting or lowering link mechanism B.

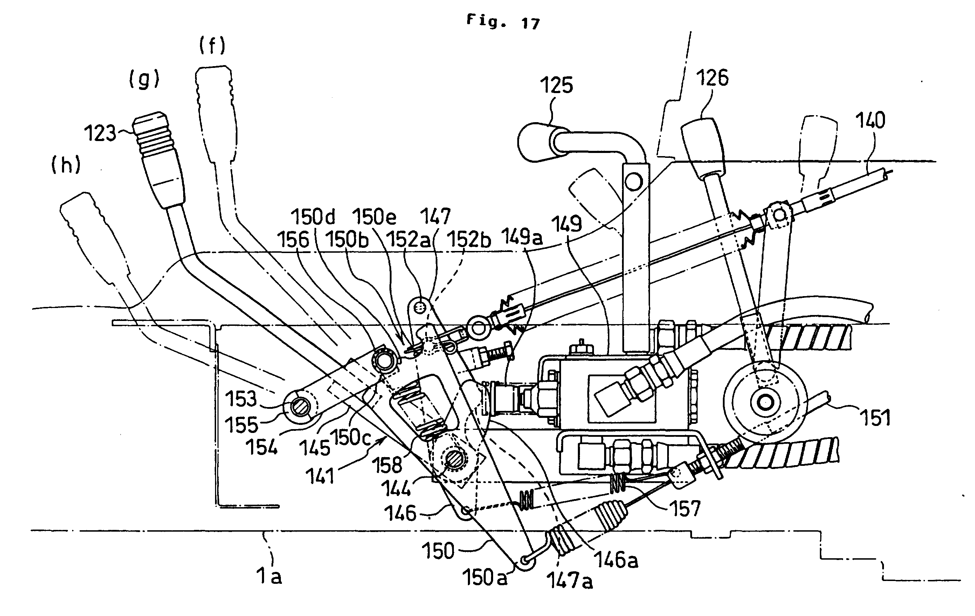

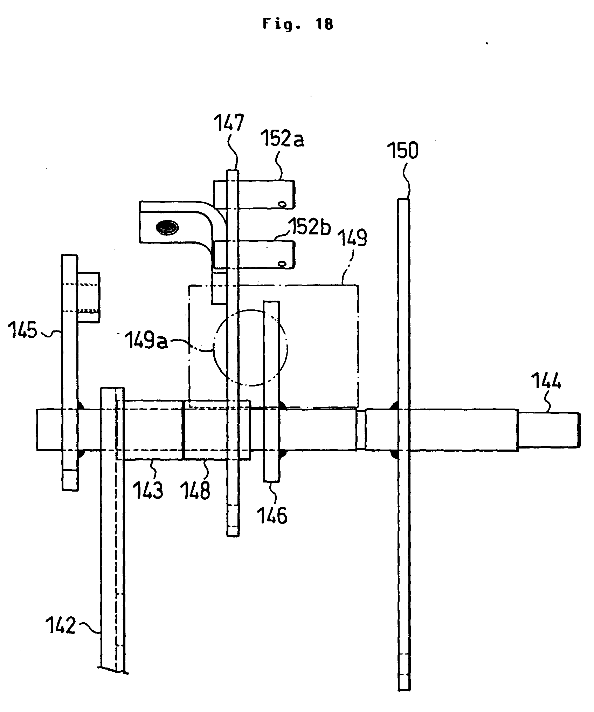

As shown in Figs. 17 and 18, the lifting or lowering operation member 141 may comprise a shaft support bracket 142 mounted on the machine body frame 1, a cylinder-shaped support member 143 mounted on the shaft support bracket 142 so as for its axis to be directed laterally in the left- and right-hand direction, a lever support shaft 144 extending transversely in the left- and right-hand direction and disposed in the cylinder-shaped support member 143 so as to be pivotally movable, a lever support member 145 mounted at a bottom end portion on the right-hand side end of the lever support shaft 144, and a lifting or lowering lever 123 mounted at the bottom end portion on the upper end portion of the lever support member 145.

Further, a valve operation arm 146 for operating a valve is fixed to a middle portion of the lever support shaft 144 and a middle portion of a valve shift arm 147 is mounted thereon via a boss portion 148 so as to be pivotally movable lengthwise in the forward and backward direction. In the upper backward position is disposed a shift valve 149 for shifting an oil path to a lifting or lowering cylinder 166 of the lifting or lowering link mechanism B as will be described hereinafter, and a shift spool 149a is disposed projecting toward the front side from the shift valve 149.

The shift spool 149a is provided with a valve acting portion 146a formed at an upper back portion of the valve operation arm 146 and with a valve acting portion 147a formed at a back end portion of the valve shift arm 147 so as to pivot and press the shift spool 149a, thereby permitting a shift of the operation of the shift valve 149.

Thus, by shifting the shift valve 149, the lifting or lowering cylinder 166 can be contracted or expanded, thereby enabling the farm cultivating machine D to be lifted or lowered via the lifting or lowering link mechanism B. In the drawings, reference numeral 157 stands for a biasing spring.

Moreover, the valve shift arm 147 is formed at a topside end portion with upside and downside wire mounting portions 152a and 152b, respectively, in a relationship spaced apart in the radial direction of the pivotal movement of the valve shift arm 147, and the feedback wire 140 is detachably mounted on the upside and downside wire mounting portions 152a and 152b. In this embodiment, the feedback wire 140 is mounted on the downside wire mounting portion 152b.

Further, a temporary engagement member 150 is fixed to the left-hand side end portion of the lever support shaft 144 and a bottom end portion of the temporary engagement member 150 is extended in the lower backward direction to thereby form an arm portion 150a acting as automatically returning to the neutral position. A wire 151 acting as automatically returning to the neutral position is interposed between the topside end portion of the arm portion 150a for automatically returning to the neutral position and the lifting or lowering cylinder 166. The temporary engagement member 150 is formed at an upper end surface portion thereof with a temporarily locking cam portion 150b that in turn is provided with a temporarily upward locking cavity portion 150c for temporarily locking the lifting movement, a temporarily neutral locking cavity portion 150d for temporarily locking in the neutral position and a temporarily downward locking cavity portion 150e for temporarily locking the lowering movement. In Fig. 17, reference numeral 158 stands for a biasing spring.

Moreover, on the machine body frame 1 is mounted a temporarily locking arm shaft 153 on which in turn is mounted a frontside end portion of a temporarily locking arm 154 through a boss portion 155 so as to be slidable vertically in the up-and-down direction, the temporarily locking arm 154 acting as a member extending in the upper backward direction. On the other hand, a roller 156 is mounted on the backside end portion of the temporarily locking arm 154 so as to be pivotally movable, and the roller 156 is disposed in abutment with the temporarily locking cam portion 150b of the temporary engagement member 150.

With the arrangement as described hereinabove, when the lifting or lowering lever 123 is shifted to a lifting operation position (f), the roller 156 is allowed to be engaged with the temporarily upward locking cavity portion 150c, thereby temporarily locking the lifting or lowering lever 123. Likewise, when the handle column 13 is shifted to a neutral operation position (g) and a lowering operation position (h), the roller 156 is allowed to be engaged with the temporarily neutral locking cavity portion 150d and the temporarily downward locking cavity portion 150e, respectively, thereby temporarily locking the lifting or lowering lever 123 at the position involved.

When the lifting or lowering lever 123 is operated up to the lifting operation position (f), the valve acting portion 146a of the valve operation arm 146 presses the shift spool 149a, thereby allowing the shift valve 149 to shift the oil path in order to shorten the lifting or lowering cylinder 166. When the lifting or lowering cylinder 166 is operated so as to be shortened, the wire 151 for automatically returning to the neutral position is pulled, thereby causing the arm portion 150a for automatically returning to the neutral position to automatically pivot in the counterclockwise direction and automatically returning the lifting or lowering lever 123 to the neutral operation position (g) in association with the automatically pivotal movement of the arm portion 150a for automatically returning to the neutral position.

At the same time, the valve operation arm 146 is returned to the neutral position, too, thereby shifting the shift valve 149 to the neutral operation position (g).

When the farm field is cultivated with the farm cultivating machine D, the farm cultivating machine D is lowered with the lifting or lowering link mechanism B up to the position in which the backside end of the rear covering 133 comes into abutment with the ground surface of the farm field (as shown in Fig. 13) and the cultivating blades 129 are then rotated to cultivate the field.

Further, when the farm cultivating machine D is lowered more downward from the state as shown in Fig. 13, that is, the cultivating depth becomes deeper, the rear covering 133 is caused to pivot upward to lift the hanger rods 134 and 134 upward. Upon the upward movement of the hanger rods, the feedback wire 140 mounted on the topside end of the hanger rod 134 is pulled, thereby allowing the valve shift arm 147 to pivot in the clockwise direction as shown in Fig. 17 and the valve acting portion 147a to press the shift spool 149a of the shift valve 149. When the shift spool 149a is pressed, then the shift valve 149 is shifted to allow an extension of the lifting or lowering cylinder 166, thereby lifting the farm cultivating machine D through the lifting or lowering link mechanism B.

On the other hand, when the farm cultivating machine D is raised to some extent and the cultivating depth becomes shallower, the rear covering 133 is caused to pivot downward to move the hanger rods 134 and 134 in the downward direction. As the hanger rods 134 and 134 are transferred in the downward direction, then the feedback wire 140 mounted on the topside ends of the hanger rods 134 is loosened, thereby allowing the valve shift arm 147 to pivot in the counterclockwise direction as shown in Fig. 17 and the farm cultivating machine D to be lowered by the aid of the lifting or lowering link mechanism B to the contrary to the above instance.

The riding tractor A according to the present invention allows the farm cultivating machine D to automatically sustain the cultivating depth at a constant level in the manner as described hereinabove.

In this instance, the case where the feedback wire 140 is mounted on the upside wire mounting portion 152a can make the radius of pivotal movement of the valve shift arm 147 with the feedback wire 140 greater than the case where the feedback wire 140 is mounted on the downside wire mounting portion 152b. In this case, the feedback wire 140 can be pulled even by a slight pivotal movement of the rear covering 133, thereby allowing the lifting or lowering link mechanism B to lift or lower the farm cultivating machine D. In other words, a sensitivity of the lifting and lowering of the lifting or lowering link mechanism B to the rear covering 133 can be adjusted by changing the mounting of the upside and downside wire mounting portions 152a and 152b on the feedback wire 140.

Further, the case where the feedback wire 140 is mounted on the upside wire mounting portion 138a can set the range of the operation of the hanger rod 134 higher in the position, that is, to the side that makes the cultivating depth shallower, than the case where the feedback wire 140 is mounted on the downside wire mounting portion 138b, thereby making the operation range of the shift valve 149 variable. In other words, the operation range of the shift valve 149 with the feedback wire 140 can be made variable by changing the mounting of the upside and downside wire mounting portions 138a and 138b on the feedback wire 140, thereby varying a scope of controlling the cultivating depth with the farm cultivating machine D.

Moreover, the hanger rods 134 and 134 are mounted with the hanger rod stays 132 and 132 integrally disposed on the support arms 130 and 130 for supporting the covering member 131, thereby making the structure of supporting the hanger rods 134 and 134 a simplified support structure as well as reducing the number of parts and making the machine body lightweight.

### INDUSTRIAL UTILIZABILITY

The present invention can offer the following effects:
(1) The riding tractor according to the present invention comprises a hood for covering a prime mover member disposed at a back portion of the machine body thereof, a fender for covering an upper side portion of left-hand and right-hand rear wheels mounted on the left-hand and right-hand sides of the prime mover member, which are disposed integrally with each other, and a support portion disposed at a lower portion of the frontside end with its axis directed laterally in the left-hand and right-hand direction, wherein the hood and the fender are disposed so as to be integrally opened or closed by using the support portion as the fulcrum of pivotal movement. Hence, the riding tractor according to the present invention permits a variety of parts and units to be arranged in a small space around the prime mover member. Further, even if the rear wheels are mounted so close to the frame of the machine body that the dust or other material is likely to be attached to a portion between the rear wheels and the machine body frame or inside the prime mover member, the riding tractor according to the present invention can open or close the hood and the fender integrally with each other so that a space around the prime mover member and between the rear wheels and the machine body frame can be set wider, thereby allowing an overall visibility and an extremely easy maintenance including cleaning by removing dust or other material or repairing the machine parts, etc.
(2) The riding tractor according to the present invention has a step portion disposed at the front portion of the machine body and the step portion provided with plural slits each extending transversely in the left- and right-hand direction in a relationship spaced apart from each other, in which a peripheral edge surrounding each slit is formed into an upward raised edge. Thus, the operator can see the farm field surface through the slits, thereby allowing the riding tractor to run without breaking the ridge of the farm field, for instance, while running the riding tractor with the wheels astride the ridge.
   Further, as the riding tractor according to the present invention has the step portion provided with the slits having the raised peripheries around them, the operator can scrape the dust etc. off the soles of the operator's shoes and the scraped dust etc. can be removed out of the machine through the slits, thereby assisting the operation section in keeping clean.
(3) The riding tractor according to the present invention has the brake lever disposed on a one side of the handle column so as to take the operation position for releasing the braking status by raising the brake lever standing along the one side wall of the handle column and to take the operation position for braking by falling the brake lever down projecting ahead of the frontside end of the machine body frame. Thus, the operator can operate the steering wheel to take operation position for releasing the braking status by raising the brake lever standing along the one side wall of the handle column while sitting on the operator's seat. Therefore, the brake lever disposed standing upright along the side wall of the handle column causes no obstacle of the way of the operator riding and getting out of the machine body.
   Moreover, when the operator is operating the riding tractor outside the machine body after the operator has got out of the machine body, too, the operator can readily operate the brake lever to brake the riding tractor by falling it down forward from the frontside position or from the side position of the machine body because the brake lever is located standing along the one side wall of the handle column when the operator has got out of the machine body. This can rapidly stop the machine body with no trouble, for example, even upon emergency or the like, thereby ensuring a high degree of safety.
(4) For the riding tractor according to the present invention, the brake lever is coupled with the brake so as to allow the braking operation of the brake lever to be associated with the braking operation of the brake pedal, so that the riding tractor can not only achieve the effects as indicated under item (1) above but also the effects that the machine body can be promptly stopped by subjecting the brake pedal to the braking operation upon implementing the braking operation by way of the brake lever when the operator intends to stop the machine body while operating the steering wheel or the forward-backward gear shift lever from the outside of the machine body.
   Therefore, the riding tractor according to the present invention can be stopped rapidly, for example, even in case of emergency, etc., while the operator is operating the steering wheel from the outside of the machine body. This can ensure safety in running the riding tractor.
(5) For the riding tractor according to the present invention, the braking operation of the brake pedal is associated with the neutral return action of the forward-backward gear shift lever, so that the riding tractor can achieve the effects, in addition to the effects as indicated in the items (1) and (2) above, that the riding tractor can prevent the machine body from starting running rapidly even when the brake pedal is operated to release the braking status because the forward-backward gear shift lever can be returned to the neutral position and the transmission system is brought into the state in which the clutch is disconnected.
   Therefore, in particular, even when the operator is operating the machine from the outside of the machine body, the machine body does not start running abruptly, so that security of the operator can be ensured.
(6) Further, for the riding tractor according to the present invention, the valve shift arm is provided with plural wire mounting portions in a relationship spaced apart in the radial direction of the pivotal movement of the valve shift arm and the edge of the feedback wire is mounted on each of the mounting portions so as to be detachable. Thus, the radius of the pivotal movement of the valve shift arm by the feedback wire can be made so variable that a sensitivity of the lifting or lowering link mechanism to the rear covering can be adjusted.
(7) Moreover, for the riding tractor according to the present invention, the hanger rod is provided with plural wire mounting portions in a relationship spaced apart in the direction of extension of the hanger rod and the edge of the feedback wire is mounted on each of the wire mounting portions so as to be detachable. Thus, the scope of the action toward the shift valve by the feedback wire can be made so variable that the scope of controlling the cultivating depth with the farm cultivating machine can be adjusted.
(8) With the riding tractor according to the present invention, the farm cultivating machine has a cultivator frame connected to the lifting or lowering link mechanism and a pair of the support arms are disposed inclining downward in the left-and right-hand transverse direction from the cultivator frame. Further, a cultivator covering member is mounted on the topside ends of the both support arms and the middle portions of the hanger rods are mounted on the top end portions of the hanger rod stays so as to be slidable vertically in the up-and-down direction. This arrangement can make the supporting structure of the hanger rods a simplified supporting structure, thereby enabling a reduction in the number of parts and making the machine body lightweight.

## Claims

1. A tractor for riding characterized in that a hood (11) for covering a prime mover member (3) disposed at a back portion of a frame (1) of a machine body thereof is formed integrally with fenders (11a) and (11a) for covering upper portions of left- and right-hand rear wheels (7) and (7) mounted on the left- and right-hand sides of the prime mover member (3); the hood (11) is provided at a lower portion of a frontside end thereof with a support portion (11b); and the hood (11) and the fenders (11a) and (11a) are disposed so as to be integrally opened or closed with the support portion (11b) as the fulcrum of rotation.

2. A tractor for riding characterized in that a step portion (19) is provided at a front portion of the machine body thereof; and the step portion (19) is provided with a plurality of slits (19a), each extending transversely in left- and right-hand direction, in a relationship spaced apart from each other lengthwise in a forward and backward direction; wherein a periphery around each slit (19a) is formed into a raised edge (19b).

3. A tractor for riding comprising an operation section (2) disposed at a front portion of the machine body frame (1) and a prime mover member (3) and a transmission member (4) disposed at a back portion thereof;
wherein the operation section (2) is provided with a handle column (13) disposed standing upright at a front end portion of the machine body frame (1), with a brake pedal (17) and a forward-backward gear shift lever (16) disposed nearby the handle column (13), and with an operator's seat disposed in a position immediately behind the handle column (13); characterized in that:
a brake lever (15) is disposed on a one side of the handle column (13); and the brake lever (15) is disposed so as to take an operation position for releasing the braking of the tractor by raising the brake lever (15) standing along a one side wall of the handle column (13) and to take an operation position for braking the tractor by falling the brake lever (15) down forward over a frontside end of the machine body frame (1).

4. The tractor for riding as claimed in claim 3, characterized in that the brake lever (15) is coupled with the brake pedal (17) so as to be associated therewith in such a manner that a braking operation of the brake lever (15) is associated with a braking operation of the brake pedal (17).

5. The tractor for riding as claimed in claim 3 or 4, characterized in that the braking operation of the brake pedal (17) is associated with a neutral returning operation of the forward-backward gear shift lever (16).

6. A tractor for riding having a farm cultivating machine (D) connected to a back side of the tractor through a lifting or lowering link mechanism (B) so as to be liftable, a rear covering (133) mounted on a backside edge portion of a cultivator covering member (131) of the farm cultivating machine (D) so as to be movable pivotally in an up-and-down direction, and a hanger rod (134) interposed between the rear covering (133) and the cultivator covering member (131) so as to be slidable in an up-and-down direction in association with an up-and-downward pivotal movement of the rear covering (133); and
having a shift valve (149) disposed in the machine body frame (1) for shifting an oil path to a lifting or lowering cylinder (166) disposed in the lifting or lowering link mechanism (B), and a valve shift arm (147) acting pivotally upon the shift valve (149) so as to implement a shift operation of the shift valve (149);
wherein a feedback wire (140) is interposed between the valve shift arm (147) and the hanger rod (134), and an up-and-down pivotal movement of the rear covering (133) is associated with a lifting or lowering movement of the lifting or lowering link mechanism (B) via the hanger rod (134) and the feedback wire (140) so as to hold a cultivating depth at a constant level with the farm cultivating machine (D); characterized in that:
the valve shift arm (147) is provided with a plurality of wire mounting portions (152a, 152b) in a relationship spaced apart in a radial direction of pivotal movement of the valve shift arm (147); and an edge portion of the feedback wire (140) is mounted on each of the wire mounting portions (152a, 152b) so as to be detachable to adjust a lifting or lowering sensitivity of the lifting or lowering link mechanism (B) to the rear covering (133).

7. A tractor for riding having a farm cultivating machine (D) connected to a back side of the tractor through a lifting or lowering link mechanism (B) so as to be liftable, a rear covering (133) mounted on a backside edge portion of a cultivator covering member (131) of the farm cultivating machine (D) so as to be movable pivotally in an up-and-down direction, and a hanger rod (134) interposed between the rear covering (133) and the cultivator covering member (131) so as to be slidable in an up-and-down direction in association with an up-and-downward pivotal movement of the rear covering (133); and
having a shift valve (149) disposed in the machine body frame (1) for shifting an oil path to a lifting or lowering cylinder (166) disposed in the lifting or lowering link mechanism (B), and a valve shift arm (147) acting pivotally upon the shift valve (149) so as to implement a shift operation of the shift valve (149);
wherein a feedback wire (140) is interposed between the valve shift arm (147) and the hanger rod (134), and an up-and-down pivotal movement of the rear covering (133) is associated with a lifting or lowering movement of the lifting or lowering link mechanism (B) via the hanger rod (134) and the feedback wire (140) so as to hold a cultivating depth at a constant level with the farm cultivating machine (D); characterized in that:
the hanger rod (134) is provided with a plurality of wire mounting portions (138a, 138b) in a relationship spaced apart in a direction of expansion of the hanger rod (134); and an edge portion of the feedback wire (140) is mounted on each of the wire mounting portions (138a, 138b) so as to be detachable, thereby making a scope of operation for the shift valve (149) variable.

8. A tractor for riding having a farm cultivating machine (D) connected to a back side of the tractor through a lifting or lowering link mechanism (B) so as to be liftable, a rear covering (133) mounted on a backside edge portion of a cultivator covering member (131) of the farm cultivating machine (D) so as to be movable pivotally in an up-and-down direction, and a hanger rod (134) interposed between the rear covering (133) and the cultivator covering member (131) so as to be slidable in an up-and-down direction in association with an up-and-downward pivotal movement of the rear covering (133); and
having a shift valve (149) disposed in the machine body frame (1) for shifting an oil path to a lifting or lowering cylinder (166) disposed in the lifting or lowering link mechanism (B), and a valve shift arm (147) acting pivotally upon the shift valve (149) so as to implement a shift operation of the shift valve (149);
wherein a feedback wire (140) is interposed between the valve shift arm (147) and the hanger rod (134), and an up-and-down pivotal movement of the rear covering (133) is associated with a lifting or lowering movement of the lifting or lowering link mechanism (B) via the hanger rod (134) and the feedback wire (140) to hold a cultivating depth at a constant level with the farm cultivating machine (D); characterized in that:
the farm cultivating machine (D) is provided with a cultivator frame (159) connected to the lifting or lowering link mechanism (B); a pair of left- and right-hand support arms (130, 130) are disposed inclining downward in a left- and right-hand direction from the cultivator frame (159); and a cultivator covering member (131) is mounted on ends of the support arms (130, 130); a hanger rod stay (132) is disposed projecting in an upper back direction from each of the support arms (130, 130); and the hanger rod (134) is mounted at a middle portion thereof on a top end portion of each hanger rod stay (132).
